(19) Europäisches Patentamt

European Patent Office

Office européen des brevets

(11) **EP 3 620 242 B1**

(12) **EUROPEAN PATENT SPECIFICATION**

(45) Date of publication and mention of the grant of the patent:
**28.04.2021 Bulletin 2021/17**

(51) Int Cl.:
***B21D 7/12*** *(2006.01)*

(21) Application number: **19195309.0**

(22) Date of filing: **04.09.2019**

(54) **MACHINE FOR THE WORKING OF TUBES PROVIDED WITH AN OPTICAL SENSOR FOR MEASURING THE FORWARD DISPLACEMENT OF THE TUBE BEING WORKED AND/OR THE ROTATIONAL DISPLACEMENT OF THE SAME ABOUT THE LONGITUDINAL AXIS THEREOF**

VORRICHTUNG ZUM BEARBEITEN VON ROHREN MIT EINEM OPTISCHEN SENSOR ZUM MESSEN DER VORWÄRTSVERSCHIEBUNG DES BEARBEITETEN ROHRES UND / ODER DER DREHROTATION DESSELBEN UM DIE LÄNGSACHSE

MACHINE DE TRAVAIL DE TUBES DOTÉE D'UN CAPTEUR OPTIQUE PERMETTANT DE MESURER LE DÉPLACEMENT LONGITUDINAL DU TUBE À TRAVAILLER ET / OU LE DÉPLACEMENT ROTATIF DE CELUI-CI AUTOUR DE SON AXIS LONGITUDINAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.09.2018 IT 201800008356**

(43) Date of publication of application:
**11.03.2020 Bulletin 2020/11**

(73) Proprietor: **BLM S.p.A.**
**22063 Cantù (CO) (IT)**

(72) Inventor: **GEMIGNANI, Roberto**
**I-22100 COMO (IT)**

(74) Representative: **Vanzini, Christian**
**Jacobacci & Partners S.p.A.**
**Corso Emilia 8**
**10152 Torino (IT)**

(56) References cited:
**EP-A1- 3 219 406        EP-A2- 1 018 633**
**EP-A2- 3 225 322        WO-A1-2016/092381**
**US-A1- 2009 178 453**

**Description**

FIELD OF THE INVENTION

The present invention generally relates to a machine for the working, for example the bending, of tubes, bars, profiled sections and similar elongated blanks.

In the following description, reference will be made for convenience to the working of tubes, it being understood that the invention is applicable to the working of any other elongated blank, irrespective of whether it is a bar, a profiled section, etc.

Moreover, even if the following description is provided with particular reference to a machine arranged to work (specifically to bend) a tube wound in a coil, the invention is not to be intended as being limited to machines arranged to work on tubes or other elongated blanks wound in a coil, but is also applicable to machines operating on straight tube sections.

BACKGROUND OF THE INVENTION

Machines are known which, starting from a tube wound in a coil, straighten, bend and then cut the tube to size. An example of such a machine is the tube bending machine produced and marketed by the Applicant under the name 4-RUNNER. This machine is illustrated in Figures 1 to 3 of the attached drawings, where Figure 1 shows the machine as a whole, Figure 2 shows the machine without reel, while Figure 3 shows in detail the straightening unit and the feeding unit of the machine.

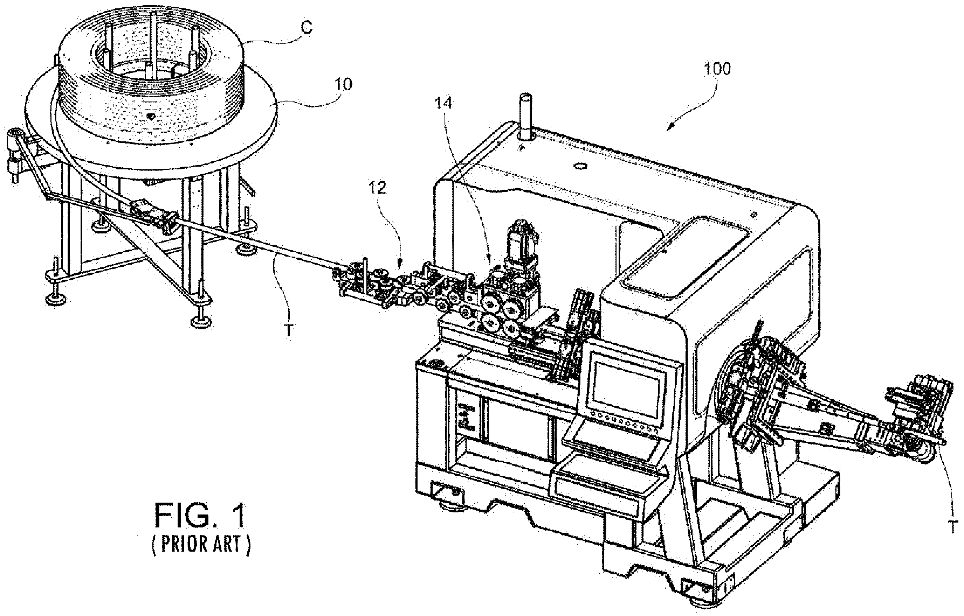

The tube to be worked (indicated at T) is loaded at the back of the machine (which is generally indicated at 100) in the form of a coil C on a reel 10 and during operation is gradually unwound from the coil C by means of a suitable rotational movement of the reel 10. Once unwound from the coil C, the tube T is straightened by a straightening unit 12 and fed along its longitudinal axis (indicated at x) by a feeding unit 14. In the machine illustrated in Figures 1 to 3, the feeding unit 14 is located downstream of the straightening unit 12, but the arrangement of the two units may also be reversed.

The straightening unit 12 comprises a first set of idler rollers 16, which act on opposite sides of the tube T in a first straightening plane perpendicular to the axis of the coil C, and a second set of idler rollers 18, which act on opposite sides of the tube T in a second straightening plane perpendicular to the first straightening plane. The function of the two sets of idler rollers 16 and 18 of the straightening unit 12 is to plastically deform the material of the tube T in more than one direction in order to finally obtain a straightened tube.

The feeding unit 14 comprises two or more pairs of motorized rollers 20, which are arranged on opposite sides of the tube T and, by rotating, transmit motion to the tube T by friction, causing the tube T to move forward along its longitudinal axis x.

The tube T thus straightened reaches the front area of the machine, where a bending head 22 carrying special bending tools bends the tube according to a geometry defined in advance by the user. The bending head 22 has sufficient degrees of freedom to rotate completely about the longitudinal axis x of the tube T and is thus capable of bending the tube T in different planes.

The tube straightening and feeding operations often cause errors in the positioning of the tube downstream of the straightening and feeding units. In fact, the cross section of the tube wound into a coil is often uneven and not circular. The drawing of the tube by means of rollers may produce non-homogeneous pressures on the material of the tube and consequent rotational displacements of the tube about its longitudinal axis, due to an incorrect adjustment of the pressures exerted by the rollers on the tube or due to imperfections in the geometric shape of the surfaces of the rollers. Such positioning errors inevitably affect the subsequent tube bending phase.

In order to ensure that the tube bending phase is carried out in accordance with the desired geometry, it is necessary that the forward displacement of the tube along its longitudinal axis is correctly measured and that any rotational displacements of the tube about its longitudinal axis are avoided or, alternatively, measured and appropriately compensated.

Typically, the forward displacement of the tube along its longitudinal axis is measured using a contact measurement device comprising a measuring wheel that, rolling on the tube, transmits the longitudinal movement of the tube to an optical encoder. In order to ensure continuous contact of the measuring wheel with the material of the tube, which is essential for the correct operation of the measurement device, the measuring wheel typically has a knurled contact surface so as to avoid slippage between the wheel and the tube even in the case of high speeds and accelerations of the tube. However, this often produces undesired marks on the surface of the tube. To overcome this inconvenience, the measuring wheel (or, at least, the radially outermost part of the wheel, which is intended to come into contact with the tube) may be made of a material with a higher friction coefficient (for example rubber). This, however, leads to a higher deformability of the measuring wheel, resulting in a reduction in measurement accuracy.

To prevent the rotational displacement of the tube about its longitudinal axis, the known machines are typically equipped with an anti-rotation device, indicated at 24 in Figures 1 to 3. The anti-rotation device 24 basically comprises a carriage 26, which is movable along the longitudinal axis x of the tube T, and two pneumatically-operated grippers 28 and 30, which are integral to the carriage 26 and to the machine structure, respectively. The carriage 26 is free to slide on a guide with recirculating-ball shoes, and its positioning in the rest condition is controlled at high speed by means of a pneumatic cylinder 32. Each of the two grippers 28 and 30 is equipped with two blocks having a groove with round cross-section with a nominal radius equal to the radius of the tube T to be worked. The tube T is always fed while the gripper 28 (i.e. the movable gripper, integral to the carriage 26) is kept closed, so as to avoid rotational displacement of the tube about its axis. In the return strokes of the gripper 28, the tube T is held in position by the other gripper 30 (i.e. the fixed gripper, integral to the machine structure).

Such an anti-rotation device, besides being cumbersome, also lead to an increase in the overall cycle time of the machine.

The need to measure the forward displacement of the tube along its longitudinal axis and/or the rotational displacement of the tube about its longitudinal axis also exists in the case of tube working machines, in particular tube bending machines, operating on straight tube sections, not only on machines operating on tubes wound in coil. WO 2016/092381 A1 discloses a machine according to the preamble of claim 1.

SUMMARY OF THE INVENTION

It is an object of the present invention to provide a tube working machine (or more generally, as mentioned in the introductory part of the description, a machine for working elongated blanks), which is able to measure the forward displacement of the tube being worked along its longitudinal axis and/or the rotational displacement of the tube being worked about its longitudinal axis in a precise, fast and reliable manner, without damaging the surface of the material of the tube or increasing the cycle time of the machine.

This and other objects are fully achieved according to the present invention by a tube working machine having the features defined in the accompanying independent claim 1.

Advantageous embodiments of the invention are specified in the dependent claims, the subject-matter of which is to be understood as forming an integral part of the following description.

In summary, the invention is based on the idea of equipping the machine with an optical sensor arranged to optically measure, while the tube is being worked, the forward displacement of the tube along its longitudinal axis and/or the rotational displacement of the tube about its longitudinal axis, wherein the optical sensor comprises a light source (LED or laser) for illuminating a surface portion of the tube being worked, a camera for acquiring images of said surface portion of the tube, and a digital processing unit to determine at each time instant, based on the comparison of the image of said surface portion of the tube acquired by the camera in that time instant with the image acquired at the preceding time instant, the forward displacement of the tube along its longitudinal axis and/or the rotational displacement of the tube about its longitudinal axis. By virtue of the use of such an optical sensor to measure the forward and/or rotational displacement of the tube being worked, it is no longer necessary to use a measuring wheel, as in the prior art, and therefore the aforementioned inconveniences related to the contact between the measuring wheel and the material of the tube are avoided.

Moreover, due to the fact that the optical sensor also allows precise measurement not only of the forward displacement, but also of the rotational displacement, of the tube being worked, it is no longer necessary to provide an anti-rotation system for preventing rotation of the tube, as it is the case with the prior art, but rather it is sufficient, knowing the rotational displacement of the tube upstream of the working head, to compensate for this rotational displacement by appropriate movement of the working head. The cycle time of the machine is thus not increased.

BRIEF DESCRIPTION OF THE DRAWINGS

Further features and advantages of the present invention will become more apparent from the following detailed description, given purely by way of non-limiting example with reference to the accompanying drawings, wherein:

Figure 1 shows a tube working machine according to the prior art;

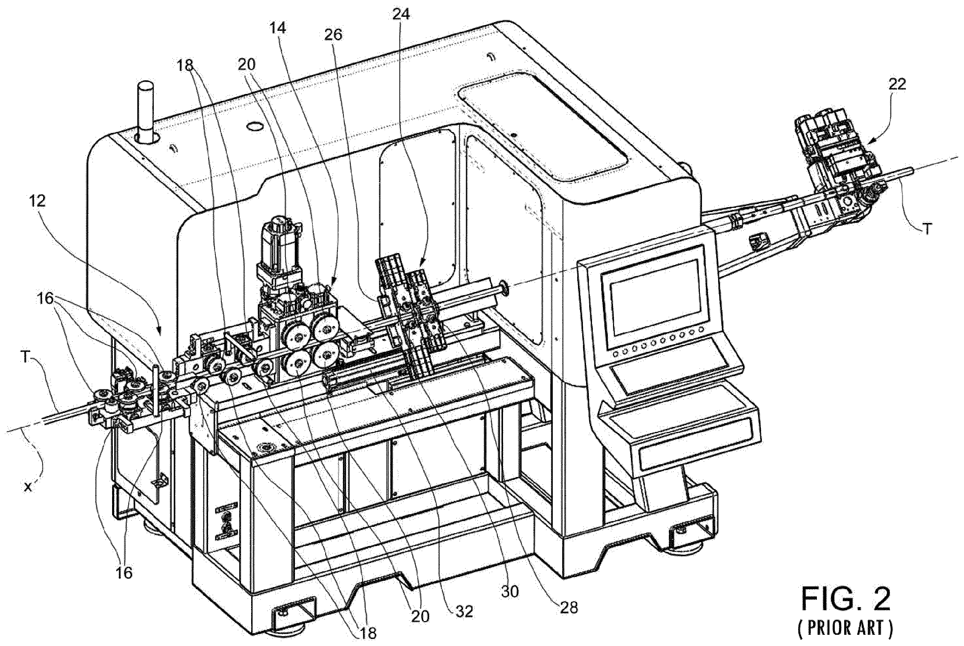

Figure 2 shows the machine of Figure 1, without reel;

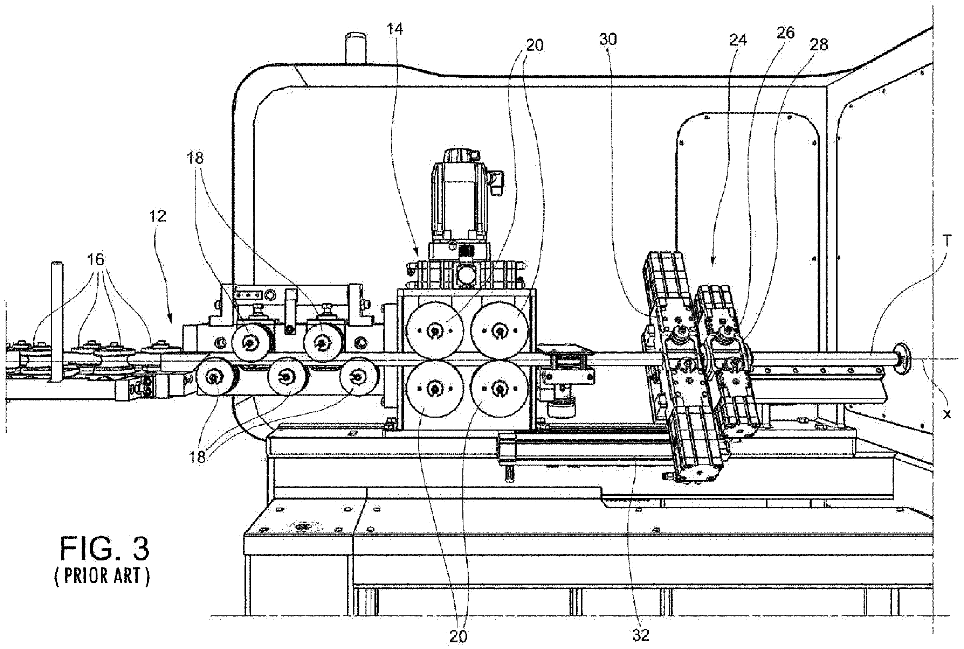

Figure 3 shows in detail the straightening unit, the feeding unit and the anti-rotation device of the machine of Figure 1;

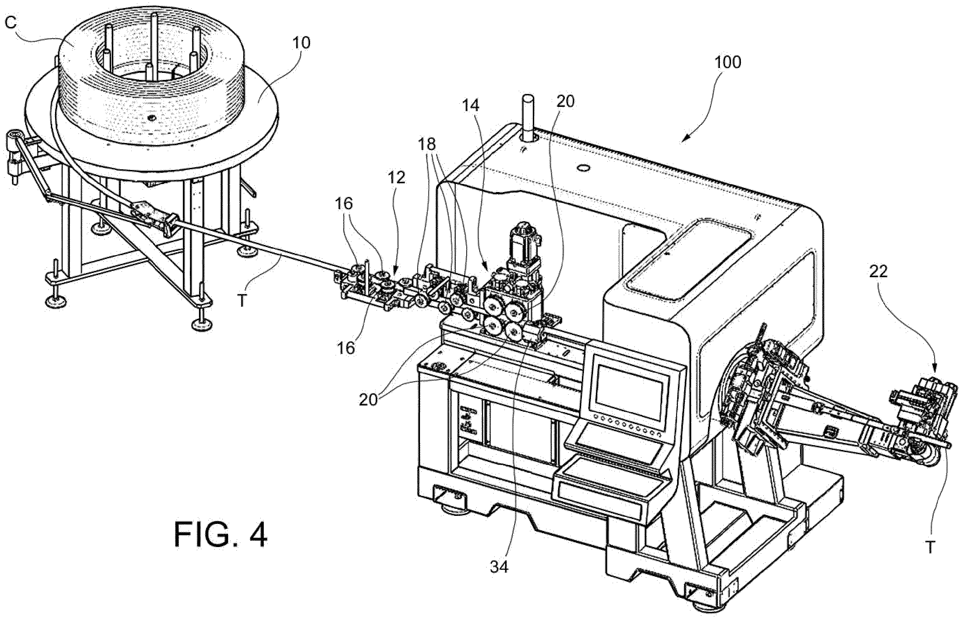

Figure 4 shows a tube working machine according to an embodiment of the present invention;

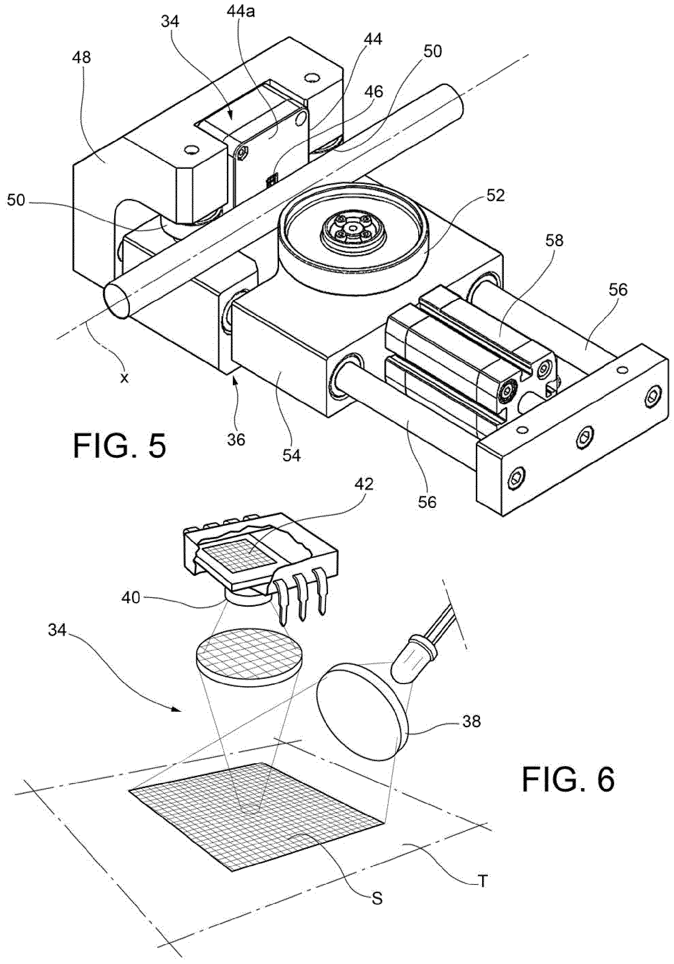

Figure 5 shows the sensor of the machine of Figure 4, along with its positioning mechanism for positioning the optical sensor near the tube being worked; and
Figure 6 shows schematically the structure of the optical sensor of Figure 5.

DETAILED DESCRIPTION OF THE INVENTION

With reference to Figure 4, where parts and elements identical or corresponding to those of Figures 1 to 3 are indicated with the same reference numbers, a tube working machine according to an embodiment of the present invention is generally indicated 100.

The machine described below with reference to Figure 4 is a tube bending machine, i.e. a machine configured to carry out tube bending operations, but the invention is not limited to this type of machine, being applicable to machines arranged to perform any other type of working operations on tubes (or on other elongated blanks). Moreover, although the machine described and illustrated herein is designed to process tubes wound in coils, the invention is not limited to this type of machine but is also applicable to machines designed to process straight tube sections.

As in the prior art described above with reference to Figures 1 to 3, the machine 100 basically comprises:

- a reel 10, on which a coil C of the tube T to be worked (in this case, to be bent) is placed;
- a straightening unit 12 arranged to straighten the tube T as it is unwound from the coil C, the straightening unit 12 comprising, for example, a first set of idler rollers 16, which act on opposite sides of the tube T in a first straightening plane perpendicular to the axis of the coil C, and a second set of idler rollers 18, which act on opposite sides of the tube T in a second straightening plane perpendicular to the first straightening plane;
- a feeding unit 14 arranged to feed the tube T from the straightening unit 12 along its longitudinal axis x, the feeding unit 14 comprising for example two pairs of motorized rollers 20, which are arranged on opposite sides of the tube T and, by rotating, transmit motion to the tube T by friction;
- a working head 22 (in this case, a bending head) that carries appropriate working tools (in this case, bending tools, which are known per se and will therefore not be described in detail herein) and has appropriate degrees of freedom to allow working operations (in this case, bending operations, even in different planes, according to a geometry that may be defined in advance by the user) to be carried out on the tube T; and
- a programmable control unit (not shown) for managing the movements of the working head 22, as well as the feeding unit 14 and (where applicable, as in the present case) of the reel 10.

In case of a machine operating on straight tube sections, the straightening unit will obviously not be provided, while the feeding unit will be provided (which will, however, have a different configuration from the one illustrated herein).

The constructional and functional details of the reel 10, of the straightening unit 12, of the feeding unit 14, of the working head 22 and of the control unit are not relevant for the purposes of the present invention and thus will not be described and illustrated further herein.

According to the invention, the machine 100 further comprises, downstream of the feeding unit 14 (and where, as in the present case, a straightening unit is also provided for, downstream of the straightening unit), an optical sensor 34 for optically measuring the forward displacement of the tube T being worked along its longitudinal axis x and/or the rotational displacement of the tube T being worked about its longitudinal axis x.

With reference to figure 5, a positioning mechanism 36 is associated with the optical sensor 34 to keep the optical sensor 34 close to the tube T being worked, in particular in alignment with the longitudinal axis x of the tube T.

With reference to Figure 6, the optical sensor 34 comprises a light source 38 (for example, a laser or LED source) for illuminating a surface portion S of the tube T, a camera 40 for high-frequency acquisition of images of the surface portion S, and a digital processing unit 42 for determining at any time instant, based on the comparison between the image of the surface portion S acquired at that time instant by the camera 40 and the image acquired at the previous time instant, the forward displacement of the tube T along the longitudinal axis x (hereinafter simply referred to, for brevity, as forward displacement) and/or the rotational displacement of the tube T about the longitudinal axis x (hereinafter simply referred to, for brevity, as rotational displacement).

The images acquired by the camera 40 are very small, for example fifteen pixels per side, but contain tiny details and imperfections of the surface portion S of the tube T in front of which the optical sensor 34 is placed. The images acquired by the camera 40 are processed in pairs by the digital processing unit 42 and each pair of consecutive images is used to calculate the (forward and rotational) displacement of the tube T in the time interval between the two time instants at which these images have been acquired.

For example, the displacement between two consecutive images is determined by cross-correlation. Indicating with $I_A(i,j)$ the grey intensity (the images are, in fact, acquired in grey scale) of each pixel of coordinates i, j of the first image, with $I_B(i,j)$ the grey intensity of the same pixel of the second image, and with m and n the displacement (in pixels) of the second image with respect to the first one in two perpendicular directions, the correlation function $\Phi(m,n)$ is equal to the total sum of the products of the intensities of each pixel of the two images, according to the following equation:

$$\Phi(m, n) = \sum_{i,j} I_A(i, j) \, I_B(i + m, j - n)$$

The correlation function $\Phi$ takes its maximum value when the two images are perfectly superimposed. To determine the displacement between two consecutive images, the displacement values m and n are calculated in the two directions that maximize the function. On the basis of these displacement values between consecutive pairs of images, the displacement of the surface portion S of the tube T facing the optical sensor 36 both along the longitudinal axis x and in the direction perpendicular to the longitudinal axis x is determined instant by instant. The diameter of the tube T being known, the angular displacement (rotation) about the longitudinal axis x is derived from the displacement of the surface portion S in a direction perpendicular to the longitudinal axis x.

With reference now again to Figure 5, the components of the optical sensor 34 mentioned above, i.e. the light source 38, the camera 40 and the digital processing unit 42, are housed in a casing 44 with a transparent window 46 through which the light beam emitted by the light source 38 passes and through which the camera 40 acquires images of the surface portion S of the tube T.

The casing 44 is kept close to the tube T, with the window 46 facing the tube T and aligned with the longitudinal axis x of the same, by the aforementioned positioning mechanism 36. Figure 5 of the attached drawings shows an example of embodiment of the positioning mechanism 36, it being understood that this embodiment is not binding for the purposes of the present invention and that other embodiments of this mechanism are also possible, in so far as they ensure the positioning of the casing 44 of the optical sensor 34 close to the tube T and in alignment with the longitudinal axis x of the latter.

According to the embodiment of Figure 5, the positioning mechanism 36 comprises first of all a support body 48 on which the casing 44 of the optical sensor 34 is mounted. The support body 48 has a pair of rollers 50 which are mounted freely rotatable and are arranged on longitudinally opposite sides of the casing 44, but on the same side of the tube T. The rollers 50 protrude towards the tube T from a front face 44a of the casing 44 where the window 46 is provided, in such a manner that during operation, with the rollers 50 kept in contact with the tube T while the latter moves forward along its longitudinal axis x, the front face 44a of the casing 44 is positioned parallel to the longitudinal axis x of the tube T and at a given fixed distance from the surface of the tube T. The positioning mechanism 36 further comprises a counter roller 52, which is arranged on the opposite side of the tube T with respect to the rollers 50 and is mounted on a slide 54 so as to be freely rotatable. The slide 54 is slidably mounted, for example along a pair of guide rods 56, in a direction perpendicular to the front face 44a of the casing 44 of the optical sensor 34. The positioning mechanism 36 further comprises an air spring 58 operatively interposed between the support body 48 and the slide 54 to urge the counter roller 52 towards the rollers 50 and thus ensure contact of the rollers 50 with the tube T.

Thanks to the presence of the optical sensor 34, the control unit of the machine receives, in real time, precise information on the forward displacement of the tube T along its longitudinal axis x, on the basis of which it controls the work process. Moreover, thanks to the fact of receiving, in real time, precise data on the rotational displacements, if any, of the tube T upstream of the working head 22 about its longitudinal axis x, the control unit of the machine is able to compensate, if necessary, for this rotational displacement by appropriately controlling the movements of the working head 22, without therefore the need to use a complex and expensive anti-rotation mechanism to prevent rotational displacement of the tube T being worked about its longitudinal axis x and without increasing the cycle time of the machine.

Depending on the specific application, it is of course possible to measure only one of the two components of the movement of the tube, i.e. only the forward displacement or only the rotational displacement, the structure of the optical sensor remaining unchanged.

Naturally, the principle of the invention remaining unchanged, the embodiments and the constructional details may vary widely with respect to those described and illustrated herein purely by way of non-limiting example, without thereby departing from the scope of the invention as defined in the accompanying claims.

**Claims**

1. Machine for the working of tubes (T) and similar elongated blanks, such as for example bars and profiled sections, comprising a working head (22) carrying working tools suitable for carrying out one or more working operations on the tube (T), a tube feeding unit (14) for feeding the tube (T) along its longitudinal axis (x) towards the working head (22), and a programmable control unit arranged to control the tube feeding unit (14) and the working head (22),
said machine further comprising, downstream of the tube feeding unit (14), an optical sensor (34) arranged to optically measure, while the tube (T) is being worked, the forward displacement of the tube (T) along its longitudinal axis (x) and/or the rotational displacement of the tube (T) about its longitudinal axis (x), wherein the optical sensor (34) comprises a light source (38) for illuminating a surface portion (S) of the tube (T), a camera (40) for acquiring images of said surface portion (S) of the tube (T),
said machine being **characterized by** further comprising a digital processing unit (42) for determining at each time instant, based on the comparison of the image of said surface portion (S) of the tube (T) acquired by the camera (40) in that time instant with an image of said surface portion (S) of the tube (T) acquired by the camera (40) at a preceding time instant, the forward displacement of the tube (T) along its longitudinal axis (x) and/or the rotational displacement of the tube (T) about its longitudinal axis (x).

2. Machine according to claim 1, wherein the control unit is connected to the optical sensor (34) to receive from the optical sensor (34) data relating to the forward displacement of the tube (T) along its longitudinal axis (x) and/or to the rotational displacement of the tube (T) about its longitudinal axis (x) and to control, during working, the tube feeding unit (14) and the working head (22) based on these data.

3. Machine according to claim 1 or claim 2, further comprising a positioning mechanism (36) for keeping the optical sensor (34) close to the tube (T) that is being worked and aligned with the longitudinal axis (x) of said tube (T).

4. Machine according to claim 3, wherein the optical sensor (34) comprises a casing (44) wherein the light source (38), the camera (40) and the digital processing unit (42) are accommodated, said casing (44) having a front face (44a), operatively facing the tube (T) that is being worked, in which front face (44a) there is provided a transparent window (46) through which the light beam emitted by the light source (38) passes and through which the camera (40) acquires images of said surface portion (S) of the tube (T), and wherein the positioning mechanism (36) is configured to keep said front face (44a) of the casing (44) at a given fixed distance from the surface of the tube (T) that is being worked and parallel to the longitudinal axis (x) of the tube (T).

5. Machine according to claim 4, wherein the positioning mechanism (36) comprises a first body (48) on which the casing (44) of the optical sensor (34) is mounted, first roller means (50) carried by said first body (48), a second body (54) facing said first body (48) and movable relative to the latter in a direction perpendicular to said front face (44a) of the casing (44) of the optical sensor (34), second roller means (52) carried by said second body (54), and actuator means (58) operatively interposed between said first body (48) and second body (54) to urge said first body (48) and second body (54) towards each other along said perpendicular direction and to keep said first and second roller means (50, 52) in contact with the surface of the tube (T) on opposite sides of the longitudinal axis (x) of the tube (T).

6. Machine according to claim 5, wherein said actuator means (58) comprise an air spring.

7. Machine according to any one of the preceding claims, wherein the working head (22) carries bending tools for carrying out bending operations on the tube (T).

8. Machine according to any one of the preceding claims, wherein the machine (100) is arranged to work on tubes (T) that are wound in coil (C) and further comprises a reel (10) for unwinding the coil (C) of tube (T) to be worked and a straightening unit (12) for straightening the tube (T) while the tube (T) is being unwound from the coil (C), and wherein the optical sensor (34) is arranged downstream of the straightening unit (12).

**Patentansprüche**

1. Maschine für die Bearbeitung von Röhren (T) und ähnlichen länglichen Rohlingen, wie beispielsweise Balken und profilierten Abschnitten, mit einem Bearbeitungskopf (22), der zum Ausführen eines oder mehr Bearbeitungsvorgänge auf der Röhre (T) geeignete Bearbeitungswerkzeuge trägt, einer Röhrenzufuhreinheit (14) zum Zuführen der Röhre (T) entlang ihrer longitudinalen Achse (x) in Richtung des Bearbeitungskopfs (22), und einer programmierbaren Steuerungseinheit, die zum Steuern der Röhrenzufuhreinheit (14) und des Bearbeitungskopfs (22) angeordnet ist, welche besagte Maschine ferner, der Röhrenzufuhreinheit (14) nachgelagert, einen optischen Sensor (34), der zum optischen Messen, während die Röhre (T) bearbeitet wird, des Vorwärtsversatzes der Röhre (T) entlang ihrer longitudinalen Achse (x) und/oder des Drehversatzes der Röhre (T) um ihre longitudinale Achse (x) angeordnet ist, bei der der optische Sensor (34) eine Lichtquelle (38) zum Beleuchten eines Oberflächenabschnitts (S) der Röhre (T), eine Kamera (40) zum Beschaffen von Bildern besagten Oberflächenabschnitts (S) der Röhre (T) aufweist, welche besagte Maschine **dadurch gekennzeichnet ist, dass** sie ferner eine digitale Verarbeitungseinheit (42) zum Bestimmen zu jedem Zeitpunkt, basierend auf dem Vergleich des Bildes besagten Oberflächenabschnitts (S) der Röhre (T), das durch die Kamera (40) in jenem Zeitpunkt beschafft wird, mit einem Bild besagten Oberflächenabschnitts (S) der Röhre (T), das durch die Kamera (40) zu einem vorhergehenden Zeitpunkt beschafft wird, des Vorwärtsversatzes der Röhre (T) entlang ihrer longitudinalen Achse (x) und/oder des Drehversatzes der Röhre (T) um ihre longitudinale Achse (x) aufweist.

2. Maschine nach Anspruch 1, bei der die Steuerungseinheit mit dem optischen Sensor (34) zum Empfangen von Daten, die mit dem Vorwärtsversatz der Röhre (T) entlang ihrer longitudinalen Achse (x) und/oder dem Drehversatz der Röhre (T) um ihre longitudinale Achse (x) in Zusammenhang stehen, von dem optischen Sensor (34) und zum Steuern, während einer Bearbeitung, der Röhrenzufuhreinheit (14) und des Bearbeitungskopfs (22) basierend auf diesen Daten verbunden ist.

3. Maschine nach Anspruch 1 oder Anspruch 2, ferner mit einem Positionierungsmechanismus (36) zum Halten des optischen Sensors (34) nahe an der Röhre (T), die bearbeitet wird, und mit der longitudinalen Achse (x) besagter Röhre (T) fluchtend.

4. Maschine nach Anspruch 3, bei der der optische Sensor (34) ein Gehäuse (44) aufweist, in dem die Lichtquelle (38), die Kamera (40) und die digitale Verarbeitungseinheit (42) aufgenommen sind, welches besagtes Gehäuse (44) eine vordere Fläche (44a), die der Röhre (T), die bearbeitet wird, operativ zugewandt ist, aufweist, in welcher vorderen Fläche (44a) ein transparentes Fenster (46), durch das der Lichtstrahl, der durch die Lichtquelle (38) ausgestrahlt wird, verläuft und durch das die Kamera (40) Bilder besagten Oberflächenabschnitts (S) der Röhre (T) beschafft, vorgesehen ist, und bei der der Positionierungsmechanismus (36) dazu ausgebildet ist, besagte vordere Fläche (44a) des Gehäuses (44) in einem vorgegebenen festen Abstand von der Oberfläche der Röhre (T), die bearbeitet wird, und parallel zu der longitudinalen Achse (x) der Röhre (T) zu halten.

5. Maschine nach Anspruch 4, bei der der Positionierungsmechanismus (36) einen ersten Körper (48), auf dem das Gehäuse (44) des optischen Sensors (34) montiert ist, erste Rollenmittel (50), die durch besagten ersten Körper (48) getragen werden, einen zweiten Körper (54), der besagtem ersten Körper (48) zugewandt ist und relativ zu dem letzteren in einer Richtung senkrecht zu besagter vorderen Fläche (44a) des Gehäuses (44) des optischen Sensors (34) bewegbar ist, zweite Rollenmittel (52), die durch besagten zweiten Körper (54) getragen werden, und Aktuatormittel (58), die operativ zwischen besagtem ersten Körper (48) und zweiten Körper (54) eingefügt sind, zum Drängen besagten ersten Körpers (48) und zweiten Körpers (54) in Richtung aufeinander entlang besagter senkrechten Richtung und zum Halten besagter ersten und zweiten Rollenmittel (50, 52) in Kontakt mit der Oberfläche der Röhre (T) auf entgegengesetzten Seiten der longitudinalen Achse (x) der Röhre (T) aufweist.

6. Maschine nach Anspruch 5, bei der besagte Aktuatormittel (58) eine Luftfeder aufweisen.

7. Maschine nach einem der vorhergehenden Ansprüche, bei der der Bearbeitungskopf (22) Biegewerkzeuge zum Ausführen von Biegevorgängen auf der Röhre (T) trägt.

8. Maschine nach einem der vorhergehenden Ansprüche, bei dem die Maschine (100) zum Arbeiten auf Röhren (T), die in einer Spule (C) gewickelt sind, angeordnet ist und ferner eine Rolle (10) zum Abwickeln der Spule (C) der zu bearbeitenden Röhre (T) und eine Begradigungseinheit (12) zum Begradigen der Röhre (T), während die Röhre (T) von der Spule (C) abgewickelt wird, aufweist, und bei der der optische Sensor (34) der Begradigungseinheit (12) nachgelagert angeordnet ist.

**Revendications**

1. Machine de travail de tubes (T) et d'ébauches allongées similaires, tels que par exemple des barres et des sections profilées, comprenant une tête de travail (22) portant des outils de travail adaptés pour la réalisation d'une ou de plusieurs opérations de travail sur le tube (T), une unité d'alimentation de tube (14) pour l'alimentation de tube (T) le long de son axe longitudinal (x) vers la tête de travail (22), et une unité de commande programmable agencée pour commander l'unité d'alimentation de tube (14) et la tête de travail (22),
ladite machine comprenant en outre, en aval de l'unité d'alimentation de tube (14), un capteur optique (34) agencé pour mesurer optiquement, alors que le tube (T) est en cours de travail, le déplacement vers l'avant du tube (T) le long de son axe longitudinal (x) et/ou le déplacement rotatif du tube (T) autour de son axe longitudinal (x), dans laquelle le capteur optique (34) comprend une source de lumière (38) pour l'éclairage d'une portion de surface (S) du tube (T), une caméra (40) pour l'acquisition d'images de ladite portion de surface (S) du tube (T),
ladite machine étant **caractérisée en ce qu'**elle comprend en outre une unité de traitement numérique (42) pour la détermination à chaque instant, sur la base de la comparaison de l'image de ladite portion de surface (S) du tube (T) acquise par la caméra (40) à cet instant avec une image de ladite portion de surface (S) du tube (T) acquise par la caméra (40) à un instant précédent, le déplacement vers l'avant du tube (T) le long de son axe longitudinal (x) et/ou le déplacement rotatif du tube (T) autour de son axe longitudinal (x).

2. Machine selon la revendication 1, dans laquelle l'unité de commande est raccordée au capteur optique (34) pour recevoir du capteur optique (34) des données liées au déplacement vers l'avant du tube (T) le long de son axe longitudinal (x) et/ou au déplacement rotatif du tube (T) autour de son axe longitudinal (x) et pour commander, pendant le travail, l'unité d'alimentation de tube (14) et la tête de travail (22) sur la base de ces données.

3. Machine selon la revendication 1 ou la revendication 2, comprenant en outre un mécanisme de positionnement (36) pour maintenir le capteur optique (34) près du tube (T) qui est en train d'être travaillé et aligné sur l'axe longitudinal (x) dudit tube (T).

4. Machine selon la revendication 3, dans laquelle le capteur optique (34) comprend un boîtier (44), dans laquelle la source de lumière (38), la caméra (40) et l'unité de traitement numérique (42) sont logées, ledit boîtier (44) présentant une face avant (44a), faisant face en fonctionnement au tube (T) qui est en train d'être travaillé, dans laquelle face avant (44a) il est prévu une fenêtre transparente (46) à travers laquelle le faisceau de lumière émis par la source de lumière (38) passe et à travers laquelle la caméra (40) acquiert des images de ladite portion de surface (S) du tube (T), et dans laquelle le mécanisme de positionnement (36) est configuré pour maintenir ladite face avant (44a) du boîtier (44) à une distance fixe donnée de la surface du tube (T) qui est en train d'être travaillée et parallèle à l'axe longitudinal (x) du tube (T).

5. Machine selon la revendication 4, dans laquelle le mécanisme de positionnement (36) comprend un premier corps (48) sur lequel le boîtier (44) du capteur optique (34) est monté, des premiers moyens de roulement (50) portés par ledit premier corps (48), un second corps (54) faisant face audit premier corps (48) et étant mobile par rapport à ce dernier dans une direction perpendiculaire à ladite face avant (44a) du boîtier (44) du capteur optique (34), des seconds moyens de roulement (52) portés par ledit second corps (54), et des moyens d'actionnement (58) interposés en fonctionnement entre ledit premier corps (48) et ledit second corps (54) pour pousser lesdits premier corps (48) et second corps (54) l'un vers l'autre le long de ladite direction perpendiculaire et pour maintenir lesdits premier et second moyens de roulement (50, 52) en contact avec la surface du tube (T) sur des côtés opposés de l'axe longitudinal (x) du tube (T).

6. Machine selon la revendication 5, dans laquelle lesdits moyens d'actionnement (58) comprennent un ressort à air.

7. Machine selon l'une quelconque des revendications précédentes, dans laquelle la tête de travail (22) porte des outils de cintrage pour la réalisation des opérations de cintrage sur le tube (T).

8. Machine selon l'une quelconque des revendications précédentes, dans laquelle la machine (100) est agencée pour travailler sur des tubes (T) qui sont enroulés en rouleau (C) et comprend en outre une bobine (10) pour le déroulement du rouleau (C) de tube (T) à travailler et une unité de redressage (12) pour le redressage du tube (T) alors que le tube (T) est en train d'être déroulé du rouleau (C), et dans laquelle le capteur optique (34) est agencé en aval de l'unité de redressage (12).

FIG. 1
( PRIOR ART )

EP 3 620 242 B1

FIG. 2
(PRIOR ART)

10

FIG. 3
(PRIOR ART)

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016092381 A1